# EUROPEAN PATENT APPLICATION

(11) **EP 1 290 937 A1**
(43) Date of publication of application: **12.03.2003**
(21) Application number: 01912314.0
(22) Date of filing: 13.03.2001
(51) Int. Cl.: A01G 7/02

(54) **METHOD OF PRODUCING PLANT SEEDS**

(30) Priority: 24.03.2000 JP 2000084123
(71) Applicant: JAPAN SCIENCE AND TECHNOLOGY CORPORATION, Kawaguchi-shi, Saitama 332-0012 (JP); National Agricultural Research Organisation, Tsukuba-shi, Ibaraki 305-0856 (JP)
(72) Inventor: OKADA, Masumi, Morioka-shi, Iwate 020-0124 (JP); KOBAYASHI, Kazuhiko, Tsuchiura-shi, Ibaraki 300-1173 (JP); KIM, Hang-Yong, Tsukuba-shi, Iwate 305-0051 (JP); LIEFFERING, Mark, Palmerston North (NZ); NAKAMURA, Hirofumi, Morioka-shi, Iwate 020-0065 (JP)
(74) Representative: Harding, Charles Thomas
(86) International application number: JP0101962
(87) International publication number: WO01070010

(57) **Abstract**

An object of the present invention is to provide a method of producing plant seeds for cultivation of the next generation which can be grown to plants with excellent yielding properties and cultivation properties while using an existing variety as such. In a cultivation space where the concentration of CO₂ is controlled, for example, a semi-closed space such as a greenhouse or similar structures where the concentration of CO₂ is controlled to be 200 ppm higher than that of the standard atmosphere, or a farm field utilizing a free-air carbon dioxide enrichment facility, plants which belong to grain crops, industrial crops, cattle feed crops/pasture grasses, vegetables and flowers are grown and seeds (plant seeds for cultivation of the next generation) are collected from the plants. By cultivation of the seeds, it is revealed that the seeds are grown into plants with excellent yielding properties and cultivation properties in comparison to the control seeds collected after cultivation in the standard atmosphere. For instance, in case of Oryza sativa, the yield increases by 20%.

## Description

### Technical Field

The present invention relates to plant seeds with improved yielding property and cultivation property in the next generation, which are collected from plants grown in a cultivation space where the concentration of carbon dioxide is controlled, and a method of producing the seeds and cultivating their parent plants.

### Background Art

To date, it is generally known that the elevation of atmospheric carbon dioxide concentration promotes the growth of plants, and various growth promotion techniques have been proposed. For example, Japanese Laid-Open Patent Application No. 53-98246 describes a facility for plant cultivation having an air-conditioning equipment, a thermal storage equipment, and a carbon dioxide gas supplier for the purpose of promoting the growth of plants and increasing the cultivation yield by carbon dioxide gas throughout the daylight hours regardless of the climate, and maintaining the carbon dioxide gas concentration within the range of 0 ∼ 2000 ppm in order to promote or retard the growth of plants optimally, while maintaining the temperature in the facility within the optimum range for plant cultivation by utilizing solar energy stored in the thermal storage equipment as energy for the air-conditioning equipment.

In Japanese Laid-Open Patent Application No. 11-275965, there is a description of a plant culture system in a cultivation space isolated from the outside for the purpose of saving energy cost for controlling the cultivation environment and the improvement of productivity of cultivated plants by controlling the cultivation environment and carbon dioxide concentration in the cultivation space, wherein the plant culture system comprises a plant culture facility for cultivating plants; an improving mechanism which generates hydrogen and carbon dioxide using hydrocarbon like alcohol as raw materials; a fuel-cell apparatus which generates thermal energy together with electric energy by reacting hydrogen supplied by a gas-generating means with oxygen in the air; an environmental control mechanism which adjusts carbon dioxide concentration in the air by supplying carbon dioxide generated by the improving means to the cultivation space while controlling the cultivation environment with electric energy and thermal energy supplied by the fuel-cell apparatus.

Japanese Laid-Open Patent Application No. 11-75593 describes a plant cultivating method which promotes the growth of plant seedlings such as Orchidaceae or similar species and improves the growth and the survival ratio after acclimation, and a plant culture method which promotes the growth of plants through photoautotrophic culture by using a soft-sheet type cultivation container being processed to be like a bag with holes to insert air tubes and an opening to attach a perforated membrane, as a container, and by supplying carbon dioxide gas from a gas mixture tank to the sealed cultivation container through the air tube, and subsequently sugar-free culture can be carried out.

In Japanese Laid-Open Patent Application No. 7-274724, as a method of supplying carbon dioxide gas into a greenhouse for plant cultivation wherein carbon dioxide gas can be supplied easily and an apparatus for the method, there is description of a method of supplying carbon dioxide gas into a greenhouse characterized by placing solid carbon dioxide in a greenhouse and diffusing the carbon dioxide gas emitted from the solid carbon dioxide into the greenhouse at prescribed time intervals.

Japanese Laid-Open Patent Application No. 5-184245 describes a method for controlling the environment to grow plants wherein a covering structure such as a greenhouse or similar structure is covered with a shading material to reduce light intensity, if necessary, and the inside of the covering structure is maintained to be a low temperature by a cooling apparatus for the purpose of promotion of growth and control of flower-bud differentiation and the dormant state of plants in a greenhouse by a simple method, while controlling flower-bud differentiation of the plants by supplying a prescribed amount of carbon dioxide gas into the covering structure with a carbon dioxide gas supplier. Japanese Laid-Open Patent Application No. 5-111331 describes an environmental control method for plants wherein flower-bud differentiation is controlled by appropriately supplying carbon dioxide into a covering structure such as a greenhouse in order to regulate the amount of nitrogen absorbed by the plants.

At present, plant seeds used in agricultural and forest industries are produced from plants grown in a normal atmosphere. Means of plant breeding such as selection, hybridization, gene manipulation or similar techniques are used as measures for improving yield, quality and properties such as resistance to diseases and insects in the next generation, and usually it takes several years to several decades to obtain varieties of practical use through such conventional breeding methods, and huge amount of effort and cost would be required during the process. Although the above-mentioned conventional techniques utilizing carbon dioxide aim to promote growth and/or control flower initiation of plants, it has not been known that seeds collected from plants grown under elevated carbon dioxide atmosphere results in markedly improved yield. An objective of the present invention is to provide a method of producing plant seeds for cultivation of the next generation which will grow plants with increased yield and other cultivation effective properties while using existing varieties.

### Disclosure of the Invention

The concentration of carbon dioxide (hereinafter referred to as CO₂) in the air is about 360 ppm at present. However, it is expected that the concentration will increase by around 200 ppm in the half-century ahead. For several years, the inventors of the present invention have studied the effects of this elevated atmospheric CO₂ on crops and ecosystems. During the series of the studies, an experiment for evaluating the effect of elevated CO₂ through seeds on the next generation was conducted. In the experiment, rice seeds, which had been collected in the previous year after cultivation in a high CO₂ concentration field or a normal atmosphere field, were grown in a nursery and then transplanted to a high CO₂ concentration field, and then the growth and yield were examined. As a result, the rice seeds produced in the high CO₂ concentration field exhibited remarkable growth in comparison to those produced in the normal atmosphere field, and the difference in final yield between the two types of seeds was found to be about 20 %. On the other hand, when seedlings, which had been grown from rice seeds produced in a normal atmosphere filed, were transplanted to a high CO₂ concentration field and a normal atmosphere field, the difference in yield between the two plots was about 15 %. These results provided unexpected findings: when seeds produced in the high CO₂ concentration field were cultivated in the high CO₂ concentration field, the yield increased by about 35 % in comparison to when seeds produced in the normal atmosphere field were cultivated in the normal atmosphere field, the high CO₂ concentration effect of the previous year that appears in the following year through seeds (20 %) was greater than the direct effect of the high CO₂ concentration under a current growing conditions (15 %). The present invention has been completed based on these findings.

The present invention relates to a method of producing plant seeds for cultivation of the next generation, wherein a plant is grown in a cultivation space where the concentration of carbon dioxide is controlled, and seeds are collected from the plant (claim 1), the method of producing plant seeds for cultivation of the next generation according to claim 1, wherein the concentration of carbon dioxide is 400 ∼ 1500 ppm (claim 2), the method of producing plant seeds for cultivation of the next generation according to claim 1 or 2, wherein the concentration of carbon dioxide is controlled from time of sowing or time of emergence to time of seed maturity (claim 3), the method of producing plant seeds for cultivation of the next generation according to claim 1 or 2, wherein the concentration of carbon dioxide is controlled from anthesis and fertilization to time of seed maturity (claim 4), the method of producing plant seeds for cultivation of the next generation according to claim 3 or 4, wherein the concentration of carbon dioxide is controlled all day long (claim 5), the method of producing plant seeds for cultivation of the next generation according to any one of claims 1 to 5, wherein the cultivation space is a semi-closed space such as a greenhouse or similar structure (claim 6), the method of producing plant seeds for cultivation of the next generation according to any one of claims 1 to 5, wherein a free-air carbon dioxide enrichment facility is utilized in the cultivation space (claim 7), the method of producing plant seeds for cultivation of the next generation according to any one of claims 1 to 7, wherein the plant being grown in a cultivation space where the concentration of carbon dioxide is controlled is established from the seeds collected from a plant grown in a cultivation space where the concentration of carbon dioxide was controlled (claim 8), the method of producing plant seeds for cultivation of the next generation according to any one of claims 1 to 8, wherein the plant being grown in a cultivation space where the concentration of carbon dioxide is controlled is selected from spermatophytes which belong to grain crops, industrial crops, cattle feed crops/pasture grasses, vegetables and flowers (claim 9), the method of producing plant seeds for cultivation of the next generation according to claim 9, wherein the spermatophytes which belong to grain crops, industrial crops, cattle feed crops/pasture grasses, vegetables and flowers are selected from Poaceae (Gramineae), Fabaceae (Leguminosae), Solanaceae, Brassicaceae (Crusiferae), Cucurbitaceae, Chenopodiaceae, Apiaceae (Umbelliferae), Asteraceae (Compositae), Rosaceae and Liliaceae (claim 10), and the method of producing plant seeds for cultivation of the next generation according to claim 10, wherein the Poaceae (Gramineae) is Oryza sativa (claim 11).

The present invention further relates to plant seeds for cultivation of the next generation obtained by the method of producing plant seeds for cultivation of the next generation according to any one of claims 1 to 11 (claim 12), a method of cultivating plants wherein plant seeds for cultivation of the next generation produced by the method of producing plant seeds for cultivation of the next generation according to any one of claims 1 to 11 are cultivated (claim 13), the method of cultivating plants according to claim 13, wherein the plants are cultivated in a cultivation space where the concentration of carbon dioxide is controlled (claim 14), the method of cultivating plants according to claim 14, wherein the plants are cultivated under the condition that the concentration of carbon dioxide is 400 ∼ 1500 ppm (claim 15), the method of cultivating plants according to any one of claims 13 to 15, wherein the plants are cultivated in a cultivation space where a free-air carbon dioxide enrichment facility is utilized (claim 16).

### Best Mode for Carrying out the Invention

The method of producing plant seeds for cultivation of the next generation according to the present invention comprises the steps of: growing plants in a cultivation space under controlled atmospheric CO₂ concentration; and collecting seeds of the plants. The plant seeds for cultivation of the next generation here means plant seeds used for cultivating the next generation of plants, and therefore, plant seeds which are not used for cultivating the next generation of plants, for instance, plant seeds used for food, are excluded even if such plant seeds are obtained from plants grown in a cultivation space under controlled atmospheric CO₂ concentration.

In the present invention, the plants grown in a cultivation space under controlled atmospheric CO₂ concentration are not particularly limited as long as the plants are spermatophytes, and examples of such spermatophytes include grain crops, vegetables or similar crops, where an increase of yield is desired; and flowers or similar ornamental crops, where healthy and vigorous growth is desired. As examples of these plants, plants selected from Poaceae (Gramineae), Fabaceae (Leguminosae), Solanaceae, Brassicaceae (Crusiferae), Cucurbitaceae, Chenopodiaceae, Apiaceae (Umbelliferae), Asteraceae (Compositae), Rosaceae and Liliaceae are preferably exemplified. Specific examples are as follows: Oryza sativa, Hordeum vulgare, Triticum aestivum, Secale cereale, Panicum miliaceum, Echinochloa utilis, Setaria italica, Saccharum officinarum, Sorghum bicolor, Coix lachryma-jobi, Zea mays, Zoysia japonica, Avena sativa, Dactylis glomerata, Lolium multiflorum, Lolium perenne, Phleum pratense, Festuca araundinacea and similar species of Poaceae (Gramineae); Glycine max, Vigna angularis, Phaseolus vulgaris, Pisum sativum, Vicia faba, Arachis hypogaea, Lathyrus odoratus, Trifolium repens, Lupinus, Vigna unguiculata, Vigna radiata and similar species of Fabaceae (Leguminosae); Nicotiana tabacum, Solanum melongena, Solanum tuberosum, Lycopersicon esculentum, Capsicum annuum, Capsicum annuum var. grossum and similar species of Solanaceae; Raphanus sativus, Brassica napus, Wasabia japonica, Brassica juncea, Brassica oleracea var. capitata, Brassica pekinensis, Brassica rapa var. glabra, Brassica campestris, Brassica rapa, Brassica chinensis, Brassica oleracea var. italica, Brassica oleracea var. botrytis, Nasturtium officinale and similar species of Brassicaceae (Crusiferae); Cucurbita moschata, Cucumis sativus, Cucumis melo, Luffa aegyptiaca, Citrullus lanatus, Cucumis melo var. makuwa, Lagenaria siceraria (Benincasa hispida), Momordica charantia, Cucumis melo var. conomon and similar species of Cucurbitaceae; Spinacia oleracea, Salsola komarovi and similar species of Chenopodiaceae; Daucus carota, Cryptotaenia japonica, Apium graveolens, Petroselinum crispum, Oenanthe javanica and similar species of Apiaceae (Umbelliferae); Lactuca sativa var. capitata, Chrysanthemum, Chrysanthemum coronarium, Cichorium endivia, Arctium lappa, Helianthus annuus and similar species of Asteraceae (Compositae); Rubus, Rosa and similar species of Rosaceae; Allium fistulosum, Allium cepa, Allium sativum, Allium tuberosum, Lilium, Tulipa gesneriana, Freesia reflacta and similar species of Liliaceae; Gossypium arboreum, Abelmoschus esculentus, Hibiscus cannabinus and similar species of Malvaceae; Pharbitis nil, Ipomoea batatas and similar species of Convolvulaceae; Fagopyrum esculentum and similar species of Polygonaceae; Dianthus caryophyllus, Gypsophila elegans and similar species of Caryophyllaceae; and Morus bombycis, Cannabis sativa and similar species of Moraceae; Sesamum indicum and similar species of Pedaliaceae; Perilla frutescens and similar species of Lamiacea (Labiatae); Gentiana scabra Bunge var. buergeri, Eustoma grandiflorum and similar species of Gentianaceae. Among these plants, C3 plants that fix CO₂ using the C3 photosynthesis pathway such as monocotyledonous plants like Oryza sativa, Triticum aestivum, Hordeum vulgare and so on, and dicotyledonous plants like Glycine max, Solanum tuberosum, Raphanus sativus var. hortensis and so on are more preferable than C4 plants that fix CO₂ using the C4 photosynthesis pathway such as monocotyledonous plants like Zea mays, Saccharum officinarum, Sorghum bicolor and so on, and dicotyledonous plants like. Amaranthus in terms of yield increase as well as healthy and vigorous growth.

The cultivation space under controlled atmospheric CO₂ concentration in the present invention is not particularly limited as long as it is a space where plants can be cultivated in the controlled CO₂ concentration atmosphere; for example, a semi-closed space such as a greenhouse or similar structures, and an open space such as an outdoor field or similar circumstance. A hitherto known traditional means equipped with a CO₂ sensor, a CO₂ gas source such as a CO₂ gas cylinder, and means for mixing atmospheres such as a gas emission pipe can be used to control the concentration of CO₂ in a semi-closed space such as a greenhouse or similar structures. In order to control the concentration of CO₂ in an open space such as an outdoor farm field, a free-air carbon dioxide enrichment facility (McLeod, A. R. and Long, S. P. (1999); Free-Air Carbon Dioxide Enrichment (FACE) in Global Change Research: A Review. Advances in Ecological Research Vol. 28, 1-56) equipped with a CO₂ sensor, a CO₂ gas source such as a CO₂ gas tank can be used where wind direction is detected with a wind vane and automatic control is conducted such that CO₂ gas is released from the windward side.

It is general knowledge in plant physiology that photosynthesis is saturated at a CO₂ concentration of about 2000 ppm, and when CO₂ concentration exceeds 5000 ppm, adverse effects will occur. In addition, the CO₂ concentration in the current standard atmosphere is found to be about 360 ppm. Based on these facts, the CO₂ concentration in the above-mentioned cultivation space is not particularly limited as long as it is higher than the CO₂ concentration in the standard atmosphere, which is about 360 ppm, and lower than 2000 ppm. However, in consideration of the realization of excellent yielding properties and cultivation properties, and economics of CO₂ gas consumption, the CO₂ concentration is preferable to be about 400 ∼ 1500 ppm, being 40 ∼ 1140 ppm higher than the CO₂ concentration in the standard atmosphere, which is about 360 ppm, and more preferable to be about 460 ∼ 660 ppm, being 100 ∼ 300 ppm higher than the CO₂ concentration in the standard atmosphere.

The period of controlling CO₂ concentration in the above-mentioned cultivation space is not limited in particular as long as it is a whole or a part of a growing period, which is from time of sowing or time of emergence to time of seed maturity. Specific examples of a part of a growing period include a period from anthesis and fertilization to seed maturity, and from anthesis-influenced period to seed maturity. The anthesis-influenced period here means a period when anthesis and fertilization abilities are influenced, and as in Oryza sativa for example, it is called the seventh-leaf stage or panicle formation stage. At the present stage, where the mechanism of the effect of high CO₂ concentration on plant seeds for cultivation of the next generation is not elucidated, it is preferable to control CO₂ concentration throughout the growing period in order to have the maximum and assured effect of high CO₂ concentration in plant seeds for cultivation of the next generation, and in view of the economics of CO₂ gas consumption, it is preferable to control CO₂ concentration from anthesis and fertilization to seed maturity. Further, it is also possible to conduct another type of CO₂ concentration control wherein the CO₂ concentration is changed according to the phases of the growing period, for instance, the CO₂ concentration can be increased from anthesis and fertilization to seed maturity.

As to the time of day for controlling CO₂ concentration in the period of controlling CO₂ concentration, at the present stage, where the mechanism of the effect of high CO₂ concentration having on plant seeds for cultivation of the next generation is not elucidated as aforementioned, it is preferable to control CO₂ concentration throughout the day and night in order to emerge the maximum and assured effect of high CO₂ concentration in plant seeds for cultivation of the next generation, and in view of the economics of CO₂ gas consumption, it is preferable to control CO₂ concentration mainly in the daytime. Further, control of CO₂ concentration wherein the CO₂ concentration is changed according to the amount of insolation, for example, the CO₂ concentration is increased when there is a lot of insolation, can be also conducted.

As a plant being grown in a cultivation space wherein the CO₂ concentration is controlled in the method of producing plant seeds for cultivation of the next generation according to the present invention, it is possible to use plants grown from seeds collected from plants being grown for one or more generations in the cultivation space wherein the CO₂ concentration is controlled. It is likely that the effect of the high CO₂ concentration is accumulated in such seeds, and therefore, such seeds are likely to exhibit more excellent yielding properties and cultivation properties than other seeds.

Plant seeds for cultivation of the next generation according to the present invention means plant seeds used for cultivating the next generation of plants, obtained by the method of producing plant seeds for cultivation of the next generation according to the present invention as explained above. Further, the method of cultivating plants according to the present invention is characterized by cultivating plant seeds for cultivation of the next generation obtained by the method of producing plant seeds for cultivation of the next generation according to the present invention explained above. There is no particular limitation as to the cultivation space, for example, a semi-closed cultivation space such as a greenhouse or similar structures, and an open cultivation space such as an outdoor farm field. In view of more excellent yielding properties and cultivation properties, cost and so on, it is preferable to cultivate plants in a cultivation space wherein the CO₂ concentration is controlled, for instance, in the CO₂ concentration atmosphere of 400 ∼ 1500 ppm, being about 40 ∼ 1140 ppm higher than the CO₂ concentration in the standard atmosphere, which is about 360 ppm, and more preferably, in the CO₂ concentration atmosphere of 460 ∼ 660 ppm, being about 100 ∼ 300 ppm higher than the CO₂ concentration in the standard atmosphere, or a similar level of CO₂ concentration. For control of CO₂ concentration in a semi-closed space such as a greenhouse or similar structures, a hitherto known traditional means consisting of a CO₂ sensor, a CO₂ gas cylinder and so on can be used, and for control of CO₂ concentration in an open space such as an outdoor farm field, it is possible to use a free-air carbon dioxide enrichment facility.

As explained above, when plants are treated with high concentration of CO₂ throughout the growing period according to the present invention, there arises a change in the reproductive.activity of the produced seeds, and the change brings about great effect to the growth and yield of the next generation. For example, in the case Oryza sativa where is treated with CO₂ at the concentration of about 200 ppm higher than that of the standard atmosphere, the yield-increase effect in the next generation reaches about 20 %. As this level of yield-increase effect, which reaches about 20 %, cannot be obtained usually by methods such as conventional breeding techniques, and it is easy to control the CO₂ concentration in a greenhouse, the present invention which makes it possible to obtain seeds with high productive capability by cultivating plants for the purpose of seed production under high CO₂ concentration condition is considered to be a highly practicable technique that can be utilized for a wide range of plants including garden crops.

The present invention is explained below more specifically with reference to an example, but the technical scope of the present invention is not limited to the example.

### (Example)

In a farm field wherein the CO₂ concentration was controlled to be about 200 ppm higher than that of the standard atmosphere by free-air carbon dioxide enrichment (hereinafter referred as a high CO₂ section), Oryza sativa cv. Akitakomachi was cultivated. The plants were cultivated under the CO₂ concentration control day and night until their harvest and then their seeds were collected. In addition, the plants were cultivated also in a standard atmosphere section and their seeds were collected for control. No difference was observed in fertility of rice grain, milling ratio, and distribution of the thickness of brown rice grains or other characteristics between seeds from the high CO₂ section and from the standard atmosphere section for control. According to an analysis of relative viscosity and protein content which affect flavor, seeds from the high CO₂ section exhibited low protein content and high viscosity as shown in Table 1.

**Table 1**

| | Seeds from high CO₂ section (a) | Seeds from standard atmosphere section (b) | Ratio (%; a/b×100) |
|---|---|---|---|
| Protein content (mg/g) | 69.8 | 76.5 | 91 |
| Relative viscosity (unit) | 227 | 212 | 107 |

Seedlings grown from seeds collected from plants cultivated in the high CO₂ section and those grown from seeds collected from plants cultivated in the standard atmosphere for control, both of which were selected by gravity at the same standard, were cultivated in the following year in a high CO₂ section with the same condition as that of the previous year. The growth (total dry weight, leaf area, ear weight) of plants established from both seedlings were measured at 3 months after emergence, at time of heading (August) and at harvest (September). The mean values of 12 hills of each section are shown in Table 2. As Table 2 indicates, in comparison to the plants grown from the seeds from the standard atmosphere section for control, the plants grown from the seeds from the high CO₂ section already showed marked growth when they were seedlings, and the marked growth was maintained through time of heading (August) and harvest (September), and it was found that the effect of seeds from the high CO₂ section continued throughout the growing period. Further, because the seeds were selected by gravity at the same standard as aforementioned, it is presumed that the difference of about 20 % in final yield has resulted not from the difference in size or weight of the seed but from an endogenous factor. However, the mechanism has not been elucidated yet.

**Table 2**

| | | Total dry weight (g/hill) | Leaf area (cm²/hill) | Ear weight (g/hill) |
|---|---|---|---|---|
| Seeds from high CO₂ section (a) | 3 months after emergence | 0.116 | - | - |
| | heading (August) | 81.4 | 2309 | 29.8 |
| | harvest (September) | 108.7 | 1395 | 55.8 |
| Seeds from standard atmosphere section (b) | 3 months after emergence | 0.103 | - | - |
| | heading (August) | 69.2 | 2083 | 21.4 |
| | harvest (September) | 90.5 | 1112 | 47.4 |
| Ratio (%; a/b×100) | 3 months after emergence | 113 | - | - |
| | heading (August) | 118 | 111 | 139 |
| | harvest (September) | 120 | 125 | 118 |

### (Reference)

Rice (Oryza sativa) plants grown from the seeds from the standard atmosphere section were transplanted to a high CO₂ concentration section or a standard atmosphere section, and cultivated through to harvest, then the growth of the plants were measured. As shown in Table 3, the yield in the high CO₂ concentration section was about 15 % higher than that in the standard atmosphere section. Examining from this result and the result of Example 1, cultivation in a high CO₂ concentration section using seeds produced in a high CO₂ concentration section shows about 35 % increase in yield in comparison to the yield from cultivation in a standard atmosphere section using seeds produced in a standard atmosphere section. The remarkable result has been thus obtained that the high CO₂ concentration effect of the previous year appearing in the following year through seeds (20 %) is greater than the temporary effect of the high CO₂ concentration during a growing process (15 %).

**Table 3**

| | High CO₂ section (a) | Standard atmosphere section (b) | Ratio (%; a/b×100) |
|---|---|---|---|
| Yield of unhulled rice (kg/10a) | 688 | 594 | 116 |

### Industrial Applicability

When seeds from plants which had been cultivated under the condition where the concentration of CO₂ is higher than that of the standard atmosphere are collected as seeds for cultivation of the next generation and then used to grow plants of the next generation according to the present invention, improvement of seedling quality, and increase of wet weight or dry weight at each growth stage are observed in comparison to the case using seeds collected in the standard atmosphere, and the final yield remarkably increases as well. The present invention thus makes it possible to easily produce seeds for cultivation of the next generation with improved cultivation property and yielding property.

## Claims

1. A method of producing plant seeds for cultivation of the next generation, wherein a plant is grown in a cultivation space where the concentration of carbon dioxide is controlled, and seeds are collected from the plant.

2. The method of producing plant seeds for cultivation of the next generation according to claim 1, wherein the concentration of carbon dioxide is 400 ∼ 1500 ppm.

3. The method of producing plant seeds for cultivation of the next generation according to claim 1 or 2, wherein the concentration of carbon dioxide is controlled from time of sowing or time of emergence to time of seed maturity.

4. The method of producing plant seeds for cultivation of the next generation according to claim 1 or 2, wherein the concentration of carbon dioxide is controlled from anthesis and fertilization to time of seed maturity.

5. The method of producing plant seeds for cultivation of the next generation according to claim 3 or 4, wherein the concentration of carbon dioxide is controlled all day long.

6. The method of producing plant seeds for cultivation of the next generation according to any one of claims 1 to 5, wherein the cultivation space is a semi-closed space such as a greenhouse or similar structure.

7. The method of producing plant seeds for cultivation of the next generation according to any one of claims 1 to 5, wherein a free-air carbon dioxide enrichment facility is utilized in the cultivation space.

8. The method of producing plant seeds for cultivation of the next generation according to any one of claims 1 to 7, wherein the plant being grown in a cultivation space where the concentration of carbon dioxide is controlled is established from the seeds collected from a plant grown in a cultivation space where the concentration of carbon dioxide was controlled.

9. The method of producing plant seeds for cultivation of the next generation according to any one of claims 1 to 8, wherein the plant being grown in a cultivation space where the concentration of carbon dioxide is controlled is selected from spermatophytes which belong to grain crops, industrial crops, cattle feed crops/pasture grasses, vegetables and flowers.

10. The method of producing plant seeds for cultivation of the next generation according to claim 9, wherein the spermatophytes which belong to grain crops, industrial crops, cattle feed crops/pasture grasses, vegetables and flowers are selected from Poaceae (Gramineae), Fabaceae (Leguminosae), Solanaceae, Brassicaceae (Crusiferae), Cucurbitaceae, Chenopodiaceae, Apiaceae (Umbelliferae), Asteraceae (Compositae), Rosaceae and Liliaceae.

11. The method of producing plant seeds for cultivation of the next generation according to claim 10, wherein the Poaceae (Gramineae) is Oryza sativa.

12. Plant seeds for cultivation of the next generation obtained by the method of producing plant seeds for cultivation of the next generation according to any one of claims 1 to 11.

13. A method of cultivating plants wherein plant seeds for cultivation of the next generation produced by the method of producing plant seeds for cultivation of the next generation according to any one of claims 1 to 11 are cultivated.

14. The method of cultivating plants according to claim 13, wherein the plants are cultivated in a cultivation space where the concentration of carbon dioxide is controlled.

15. The method of cultivating plants according to claim 14, wherein the plants are cultivated under the condition that the concentration of carbon dioxide is 400 ∼ 1500 ppm.

16. The method of cultivating plants according to any one of claims 13 to 15, wherein the plants are cultivated in a cultivation space where a free-air carbon dioxide enrichment facility is utilized.
